(19) Europäisches Patentamt
European Patent Office
Office européen des brevets

(11)     EP 2 362 557 B1

(12)     **EUROPEAN PATENT SPECIFICATION**

(45) Date of publication and mention
of the grant of the patent:
**30.04.2014   Bulletin 2014/18**

(51) Int Cl.:
***H04B 10/61*** *(2013.01)*

(21) Application number: **10290092.5**

(22) Date of filing: **24.02.2010**

(54) **MLSE in coherent optical receiver for optical filtering tolerance**

MLSE bei kohärentem optischen Empfänger für optische Filtertoleranz

Estimation séquentielle de vraisemblance maximale dans un récepteur optique cohérent pour la tolérance de filtre optique

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**31.08.2011   Bulletin 2011/35**

(73) Proprietor: **Alcatel Lucent**
**75007 Paris (FR)**

(72) Inventors:
• **Charlet, Gabriel**
**91620 Nozay (FR)**
• **Bertran Pardo, Oriol**
**91620 Nozay (FR)**
• **Renaudier, Jérémie**
**91620 Nozay (FR)**
• **Vacondio, Francesco**
**42100 Reggio Emilia (IT)**

(74) Representative: **Therias, Philippe**
**Alcatel-Lucent International**
**32, avenue Kléber**
**92700 Colombes (FR)**

(56) References cited:
• **ZHANG S ET AL: "ADC bandwidth optimization in coherent optical polarization multiplexing quadrature phase-shift keying system" COMMUNICATIONS AND PHOTONICS CONFERENCE AND EXHIBITION, 2009. ACP 2009. ASIA, IEEE, PISCATAWAY, NJ, USA, 2 November 2009 (2009-11-02), pages 1-6, XP031623336 ISBN: 978-1-55752-877-3**
• **CHARLET ET AL: "Coherent detection associated with digital signal processing for fiber optics communication" COMPTES RENDUS - PHYSIQUE, ELSEVIER, PARIS, FR LNKD- DOI: 10.1016/J.CRHY.2008.10.019, vol. 9, no. 9-10, 1 November 2008 (2008-11-01), pages 1012-1030, XP026053396 ISSN: 1631-0705 [retrieved on 2008-12-04]**
• **COLAVOLPE G ET AL: "Robust Multilevel Coherent Optical Systems With Linear Processing at the Receiver" JOURNAL OF LIGHTWAVE TECHNOLOGY, IEEE SERVICE CENTER, NEW YORK, NY, US, vol. PP, no. 13, 1 July 2009 (2009-07-01), pages 2357-2369, XP011255995 ISSN: 0733-8724**
• **CARENA A ET AL: "Impact of ADC Sampling Speed and Resolution on Uncompensated Long-Haul 111-Gb/s WDM PM-QPSK Systems" IEEE PHOTONICS TECHNOLOGY LETTERS, IEEE SERVICE CENTER, PISCATAWAY, NJ, US, vol. 20, no. 20, 15 October 2009 (2009-10-15), pages 1514-1516, XP011271883 ISSN: 1041-1135**

**Description**

The present document relates to optical communication systems. In particular, the present document relates to coherent optical receivers using MLSE techniques.

In order to increase information spectral density in optical communication systems, multilevel modulation formats, such as QPSK (quadrature phase shift keying) associated with polarization division multiplexing, may be used. Typically, in optical transmission systems performing at 100Gb/s, PDM (polarization division multiplexing) QPSK (quadrature phase shift keying) is used. These multilevel modulation formats are not very tolerant to non-linear effects, but they have a narrow optical spectrum. In order to improve the tolerance of the transmitted optical signal to non-linear distortion, it may be beneficial to use formats with lower constellation complexity, e.g. BPSK (binary phase shift keying) instead of QPSK. However, at a given transmission rate (e.g. 100Gb/s) these formats typically involve an increased spectral width, which may be too high for a 50GHz spacing between optical channels and the bandwidth limitations incurred by ROADMs (reconfigurable optical add drop multiplexers) in the optical transmission network and ADCs (analogto-digital converters) at the optical receivers. The present document addresses this issue and describes optical receivers which are specifically adapted for the reception of optical signals having an increased spectral width and having passed through a band limited transmission channel.

Zhang et al. "ADC bandwidth optimization in coherent optical polarization multiplexing quadrature phase-shift keying system", Communications and photonics conference and exhibition, IEEE, 2. Nov. 2009, pages 1-6 describes a study on the performance of a 112Gbit/s coherent polarization multiplexing QPSK system. Charlet et al, "Coherent detection associated with digital signal processing for fiber optics communication", Comptes Rendus - Physique, Elsevier, Paris, vol. 9, no. 9-10, 1.Nov.2008, pages 1012-1030 provides an overview of the modulation and detection methods used in the context of coherent optical receivers.

According to an aspect, a spectrally wide modulation format, e.g. PDM BPSK, with narrow optical filtering at the transmitter side may be associated with bandwidth limited ADCs, e.g. ADCs bandwidth below half the symbol rate, and with advanced digital signal processing including MLSE (maximum likelihood sequence) techniques at the receiver side. In order to efficiently compensate for dispersion effects, such as chromatic dispersion and PMD, which can be fully compensated by all pass FIR filters, MLSE processing should preferably be associated with FIR filters.

According to an aspect, a detection unit configured to detect a symbol from a received digital signal is described. Typically, the detection unit is part of an optical receiver and the digital signal is derived from an optical signal transmitted over an optical transmission channel. The detection unit may be implemented using a digital signal processor. The digital signal has been submitted to low pass filtering, wherein the low pass filtering may be due to optical low pass filtering within the optical transmission channel, e.g. optical low pass filtering at bandwidth limited components in a corresponding optical transmitter or in intermediate network components such as ROADM (reconfigurable optical add drop multiplexers). Furthermore, low pass filtering may be due to analog low pass filtering at the optical receiver, e.g. within the analog to digital converters.

The detection unit may comprise a filter determination unit configured to determine a first plurality of filter coefficients of a digital filter based on the digital signal. The filter determination unit may make use of a constant modulus algorithm and/or a direct detection algorithm to determine the first plurality of filter coefficients. For this purpose the digital signal may comprise a training sequence. Furthermore, the filter determination unit may take into account a digital signal which has been filtered with a digital filter configured with filter coefficients derived from the first plurality of filter coefficients, e.g. the second plurality of filter coefficients described below. The filter determination unit may also take into account the eventually detected symbol. Alternatively or in addition, the filter determination unit may make use of so called blind equalization techniques to determine and/or update the first plurality of filter coefficients.

The detection unit may comprise a filter conversion unit configured to determine a second plurality of filter coefficients from the first plurality of filter coefficients such that a digital filter configured with the second plurality of filter coefficients is essentially an all pass filter. Typically, the digital filter configured with the first plurality of filter coefficients has a high pass characteristic. This is due to the fact that the filter determination unit has a tendency to determine a digital filter which compensates the low pass filtering incurred by the digital signal. As the high pass filter characteristic may cause undesirable distortions to the digital signal, the filter conversion unit determines an all pass filter configured with the second plurality of filter coefficients from the first plurality of filter coefficients. The second plurality of filter coefficients may be determined by multiplying in the frequency domain the digital filter configured with the first plurality of coefficients by the inverse amplitude response or absolute transfer function of the digital filter configured with the first plurality of coefficients. Typically, the digital filter configured with the second plurality of filter coefficients has an essentially constant amplitude response. A possible way to generate an all pass filter, could be to transform the FIR filter (in the time domain) into a filter in the frequency domain (e.g. using a Fast Fourier Transform (FFT)). Then, the module of each frequency component of the filter could be normalized to the value one to keep only a phase response for the different frequencies. Then this all pass frequency filter could be retransformed into a temporal FIR filter (e.g. by using an inverse FFT). It should be noted that the FIR filter may also be used in the frequency domain, however, it is typically simpler to use FIR filters in the temporal domain for the DSP block of the optical receiver.

The detection unit may comprise a filter unit configured to filter the digital signal using the digital filter configured with the second plurality of coefficients. As indicated above, the output signal of the filter unit may be fed back into the filter determination unit which may take the output signal into account for the determination of the first plurality of filter coefficients. The filter unit may be configured to compensate chromatic distortion; compensate polarization mode dispersion; and/or perform polarization de-multiplexing. The filter unit may comprise a butterfly filter.

The detection unit may comprise a maximum likelihood sequence detector, referred to as MLSE detector, configured to detect the symbol from the filtered digital signal at a given time instant, while taking into account one or more symbols of one or more previous time instants. In particular, the MLSE detector may be configured to determine the symbol at the given time instant and the one or more symbols at the one or more previous time instants jointly. In such cases, the MLSE detector may be configured to execute a Viterbi algorithm, in order to determine the sequence of symbols which has a maximum likelihood.

In an embodiment, the optical signal comprises a first and a second polarization component, i.e. the optical signal is a PDM signal. In such cases, the MSLE detector may be configured to process both components separately. Alternatively, the MLSE detector may be configured to process both polarization components jointly. Furthermore, the MLSE detector may be configured to receive information from the filter determination unit and to take into account this information for the detection of the symbol. Indeed, the filter determination within the filter determination unit can provide an approximation of the low pass filtering response of the optical transmission link and the receiver, i.e. of the optical filtering and the electrical filtering incurred by the transmitted signal. This estimate or approximation of the low pass filtering response can be used to initialize the MLSE channel estimator or the MLSE detector.

According to a further aspect, an optical receiver configured to detect a symbol from a received optical digital signal transmitted over an optical transmission channel is described. The optical receiver may be a coherent optical receiver comprising a local oscillator; a coherent mixer; and/or a photodiode. The receiver may comprise a reception unit configured to convert the optical signal into a digital signal. Furthermore, the optical receiver may comprise a detection unit according to the aspects outlined in the present document, wherein the detection unit is configured to detect the symbol from the digital signal which has been submitted to low pass filtering. As outlined above, such low pass filtering may be caused by an analog-to-digital converter comprised within the optical receiver.

The optical signal may be a polarization division multiplexed optical signals. Furthermore, the optical signal may be PSK modulated, e.g. QPSK, BPSK or xPSK

(with x ranging from 2 to 8 or more) modulated. In particular, the optical signal may be a PDM BPSK signal at a transmission rate of 112 Gb/s (i.e. 56GSymbol/s) and the optical transmission channel may have a 50GHz channel spacing and a bandwidth smaller than 50GHz. I.e. the optical transmission channel may be designed for a PDM QPSK signal at a transmission rate of 112 Gb/s. In generic terms, the optical signal at a corresponding transmitter may have a signal bandwidth and the transmission channel may have a channel bandwidth. The channel bandwidth may be smaller than the signal bandwidth.

The filter determination unit may be further configured to determine an intermediate plurality of filter coefficients using a training sequence transmitted within the optical signal; wherein at the corresponding transmitter the optical signal comprising the training sequence has a training bandwidth. The training bandwidth is preferably smaller or equal to the channel bandwidth. In other words, it is suggested to reduce the bandwidth of the optical signal during the time interval of transmission of the training sequence. As such, the optical signal comprising the training sequence is not submitted to low pass filtering. This may be beneficial to avoid or reduce convergence issues incurred by a constant modulus algorithm or a direct detection algorithm used within the filter determination unit.

In an embodiment, the optical signal has a signal symbol rate, whereas the optical signal comprising the training sequence has a training symbol rate. The training symbol rate may be smaller than the signal symbol rate, thereby yielding the training bandwidth which is smaller than the signal bandwidth. In other words, the optical signal may have a reduced symbol rate (the training symbol rate) during the time interval of transmission of the training sequence. In case of a PDM BPSK signal, a signal transmitted around 28GSymbol/s typically fits well within a 50GHz channel. I.e. instead of using a signal symbol rate of 56GSymbol/s, a training symbol rate of 28GSymbol/s may be used to meet the channel bandwidth requirements of 50GHz.

The filter determination unit may be configured to determine the first plurality of filter coefficients from the intermediate plurality of filter coefficients by taking into account the ratio between the training bandwidth and the signal bandwidth. In particular, the first plurality of coefficients may be determined by interpolating the intermediate plurality of coefficients in the time-domain.

According to another aspect, a method for detecting a symbol from a received digital signal is described, wherein the digital signal has been derived from an optical signal transmitted over an optical transmission channel and wherein the digital signal has been submitted to low pass filtering. The method may comprise the steps of: determining a first plurality of filter coefficients of a digital filter based on the digital signal; and/or determining a second plurality of filter coefficients from the first plurality of filter coefficients such that a digital filter configured with the second plurality of filter coefficients is essentially an all pass filter; and/or filtering the digital signal using the digital filter configured with the second plurality of coefficients; and/or detecting the symbol from the filtered digital signal at a given time instant, while taking into account one or more symbols of one or more previous time instants, and while using a maximum likelihood criteria.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner.

The invention is explained below in an exemplary manner with reference to the accompanying drawings, wherein

> Fig. 1a illustrates an example coherent optical receiver (comprising two polarizations);
> Fig. 1b illustrates an example signal processing of a coherent optical receiver;
> Fig. 1c further illustrates the impact of signal processing on an example received signal;
> Fig. 2a illustrates an example embodiment of a coherent optical receiver using MLSE processing;
> Fig. 2b illustrates an example butterfly filter;
> Fig. 3 illustrates an example embodiment of a coherent optical receiver using MLSE processing and reduced speed filter determination;
> Fig. 4 shows an example reference setup for an optical transmission system; and
> Figs. 5 and 6 show experimental results of optical transmission channels using different types of optical coherent receivers.

MLSE is an effective solution to compensate filtering issues incurred by a signal when transmitted over a transmission path. It is particularly useful for the compensation of signal distortions which lead to interdependencies between successive transmitted symbols, e.g. intersymbol interference (ISI). Nevertheless, MLSE based detectors are not frequently used in radio communication, as it is typically preferred to increase the constellation complexity, e.g. from QPSK to QAM (quadrature amplitude modulation) and to thereby increase the spectral density of the radio transmission system by reducing the symbol rate (at constant bit rate). As a consequence of the high number of constellation points, MLSE techniques which involve the estimation of several succeeding symbols become extremely complex.

In optical communication systems, the filtering effects of the optical path such as CD (chromatic dispersion) and PMD (polarization mode dispersion), i.e. the linear transfer function of the optical path or optical channel, can typically be fully compensated by FIR (finite impulse response) filters. This is due to the fact that the distortions caused by the linear distortion effects CD and PMD can be well modeled by all pass filters, i.e. filters which will only delay some specific spectral components of the signal without changing the amplitude of the spectral components. In other words, the submission of the transmitted optical signal to the above mentioned linear distortion effects does not lead to a loss of information. On the other hand, if low pass filters, such as an optical filter at the transmitter side and/or analog bandwidth limitations of ADCs at the receiver side, are present in the optical channel, the modeling of the transfer function using FIR filters becomes less effective.

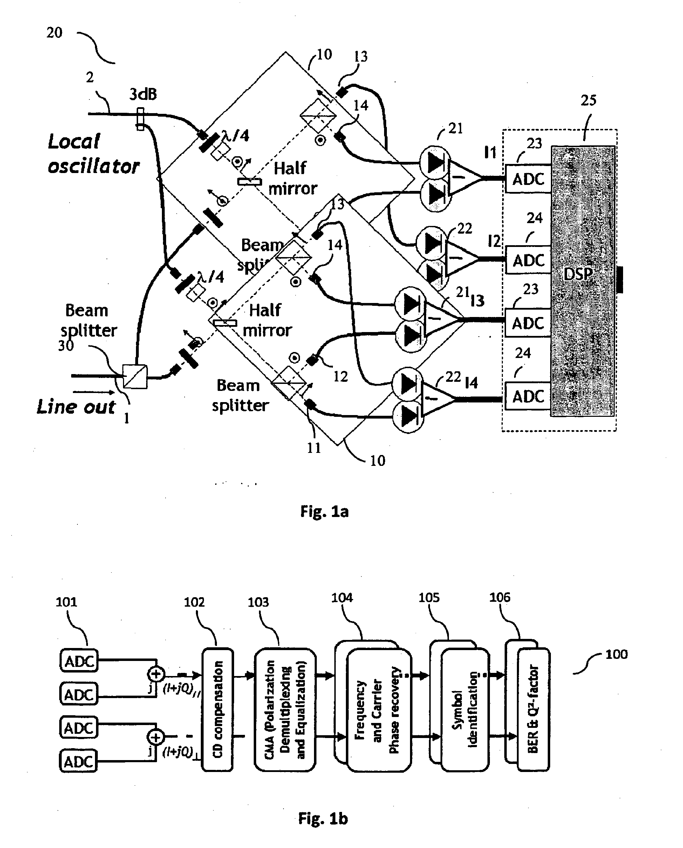

Typically, a coherent optical receiver comprises a coherent mixer 10 for coherent detection of PSK modulated signals. Such a coherent mixer 10 is used for each polarization of the received optical signal. An exemplary coherent receiver 20 for two polarizations is shown schematically in Fig. 1a. The incoming optical signal is separated into two orthogonal polarizations using a beam splitter 30. Each polarization is passed to a separate coherent mixer 10. In the following, one of the two coherent mixers 10 for one of the two polarizations is described. The coherent mixer 10 of the other polarization is built up in an analogous manner. One polarization of the received optical signal 1 at a certain optical carrier frequency and an optical signal 2 of the local oscillator (LO) at a certain local oscillator frequency are combined in the coherent mixer 10, which generates four optical interference signals for four output ports 11, 12, 13, 14. The mixer 10 is typically designed such that, from one port to the next, the relative phase between the received optical signal 1 and the L0 signal 2 is rotated by 90°. Ports 11 & 13 and 12 & 14 are fed to two sets of balanced photodiodes 21, 22. The coherent mixer 10 is used to generate optical signals that will create in-phase I and quadrature Q components on the photodiodes. In other words, the combination of the coherent mixer 10 and the photodiodes generate I and Q components. It is to be denoted that the teachings of the present document may be applied to other types of coherent receivers and other modulation formats as well.

The analog electrical in-phase and quadrature component of the received optical signal are sampled with analog-to-digital converters (ADCs) 23, 24. The sampled digital signal is then processed in the digital domain by a digital signal processor 25 to pre-process the digital signal and to eventually demodulate the transmitted data.

An example digital signal processing 100 is depicted in Fig. 1b. CD compensation 102 follows the 4 ADCs 101 (corresponding to two sets of ADCs 23, 24 of Fig. 1a). Subsequently, a CMA (constant modulus algorithm) algorithm is used for polarization de-multiplexing and equalization 103. As an outcome, two distinct polarization de-multiplexed signals are obtained. These signals are submitted to frequency and carrier phase estimation and compensation processing 104 in the following. Eventually, the compensated signals are passed to symbol identification units 105, where the data samples are detected using the constellation associated with the underlying modulation scheme, e.g. QPSK. Eventually, the quality of the overall transmission system may be measured using BER (bit error rate) or $Q^2$-factor quality measures (reference sign 106).

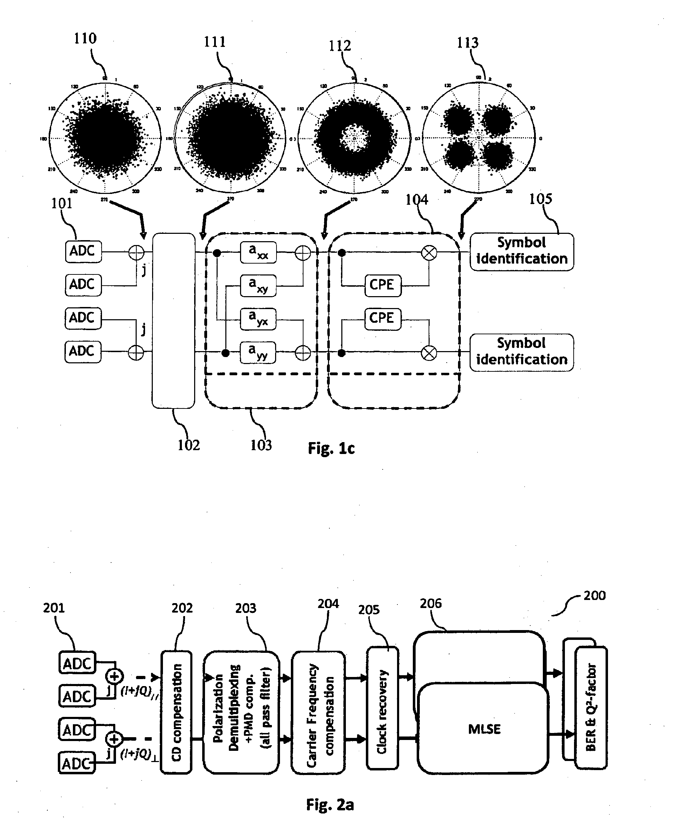

Furthermore, Fig. 1c illustrates the impact of the different processing stages on an example digital signal. It can be seen that the received symbols 110 are processed such that eventually the symbols are grouped into four clusters 113 corresponding to the constellation points of a QPSK modulation. The CD compensated symbols 111 are submitted to polarization de-multiplexing, thereby yielding the symbols 112. Eventually, the constellation of the symbol states is fixed as an outcome of the compensation of the carrier phase fluctuations in stage 104, thereby yielding the four clusters 113.

The equalization parameters in the CD compensation stage 102 may be predetermined and fixed for a given optical transmission channel. This is due to the fact that chromatic dispersion effects tend to vary only very slowly. The equalization parameters for the polarization de-multiplexer and equalization stage 103 may be determined by the use of training data and/or by adaptive optimization schemes exploiting known characteristics of the received signal, e.g. the received PDM-QPSK signal. The latter determination scheme of the equalization parameters is also referred to as blind equalization. For the determination of the equalization parameters in a blind equalizer, the so-called constant modulus algorithm (CMA) may be used to adapt the FIR taps $c_i$ for equalization, and the polarization de-multiplexing taps $a_{xx}$, $a_{xy}$, $a_{yx}$ and $a_{yy}$. As will be outlined below, the polarization de-multiplexing taps may be replaced more generally by multi-tap filters $A_{xx}$, $A_{xy}$, $A_{yx}$ and $A_{yy}$. As already indicated above, the purpose of equalization is the compensation of linear distortions incurred in the optical transmission channel and to thereby achieve higher transmission distances using a given optical input power or to be able to reduce the optical input power for a given transmission distance, thereby reducing the extent of non-linear effects on the optical fiber.

The constant modulus algorithm is discussed in the document "Digital Equalisation of 40Gbit/s per Wavelength Transmission over 2480km of Standard Fibre without Optical Dispersion Compensation", S.J. Savory et al., Proceedings of ECOC 2006, Cannes, France, paper Th2.5.5, Sep. 2006.

For signals of unit amplitude, the CMA tries to minimize the magnitude of the error term $\varepsilon_y = 1-|y|^2$, wherein $|y|^2$ is the intensity of an output signal y of the equalization stage. In the present case, the signal y may be the output signal of the polarization de-multiplexing stage 103, e.g. the equalized version of $(I + jQ)_{//}$ and $(I + jQ)_{\perp}$ in Fig. 1b. In this context, the index // indicates a first polarization of the received PMD signal and the index $\perp$ indicates a second, typically orthogonal, polarization of the received PMD signal.

In the above coherent optical receiver 100, MLSE techniques may be applied in conjunction with symbol identification 105, subsequent to frequency and carrier phase estimation and compensation 104. This, however, has been found to be not effective. It has been found that the poor performance of MSLE detection in relation to conventional optical coherent receivers 100 may be due to the behavior of the CMA algorithm used in the polarization de-multiplexing and equalization unit 103. The CMA algorithm tends to increase the higher frequency range of the demultiplexed and compensated signal in order to compensate low pass filtering of the signal incurred in the transmission channel. This amplification of the high frequency range of the received signal is poorly handled by MLSE based detectors. In other words, it has been observed that the CMA algorithm tends to provide polarization de-multiplexing and equalization filters which have a high pass transfer function, in order to compensate for low pass filtering incurred over the optical transmission channel, e.g. optical filtering at the transmitter or analog filtering at the ADCs 101.

Based on the above insight, improved digital processing at a coherent optical receiver is proposed. An example for an improved algorithm or processing stage 200 is depicted in Fig. 2a, where an MLSE detection scheme is combined with linear equalization using FIR filters. It has been found that in optical communication, MLSE detection is particularly effective if several processing steps are performed prior to MLSE detection. As such, it is preferable to perform chromatic dispersion compensation 202 subsequent to analog-to-digital conversion 201 and prior to MLSE detection.

Furthermore, it may be preferable to perform polarization de-multiplexing 203 prior to MLSE processing. In such cases, it is possible to use standard MLSE processing. In particular, it is possible to perform separate MLSE processing on each polarization de-multiplexed signal, instead of performing MLSE processing on the combined signal comprising both orthogonal polarizations. Furthermore, PMD compensation and equalization may be performed prior to MLSE processing. In order to avoid undesirable distortions incurred by polarization de-multiplexing and equalization in stage 203 caused by a CMA derived low pass filter, it is proposed to use a butterfly all pass filter for performing polarization de-multiplexing and equalization.

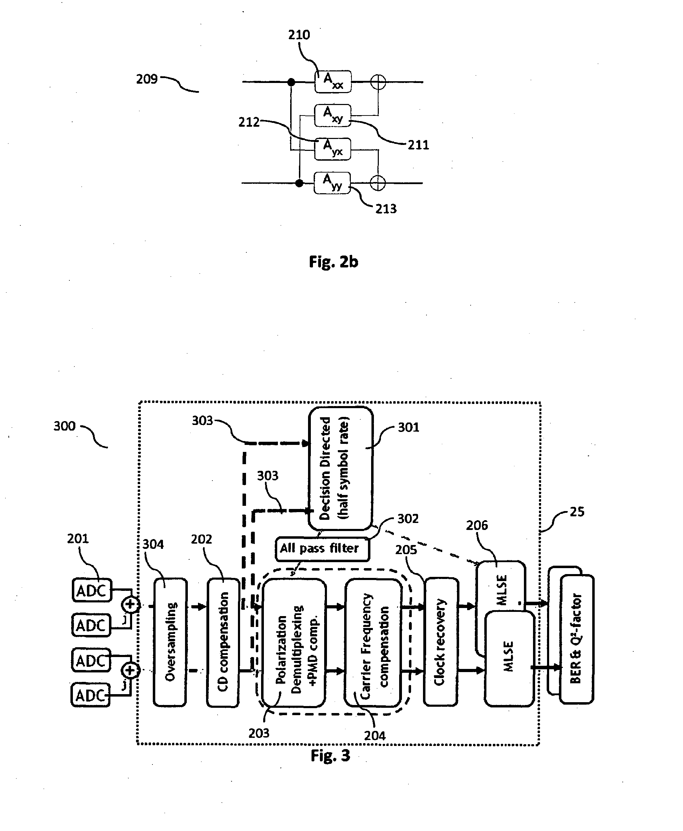

In an embodiment, the polarization de-multiplexing and equalization stage 103 may comprise a butterfly filter, for which the polarization de-multiplexing tap coefficients $a_{xx}$, $a_{xy}$, $a_{yx}$ and $a_{yy}$ are replaced by an FIR filter having a certain number of filter taps, e.g. 5 to 15 filter taps, each. Such a butterfly filter 209 is illustrated in Fig. 2b. The butterfly filter comprises four filters $A_{xx}$, $A_{xy}$, $A_{yx}$ and $A_{yy}$ (reference signs 210, 211, 212, 213, respectively). Each of these filters may be an FIR filter having $N$ filter coefficients, (typical values for N are in between 5 and 15). These filter coefficients may be determined using the CMA algorithm.

It as been found that in certain contexts, e.g. when using PDM BPSK optical transmission, the use of a "decision directed" (DD) algorithm may be more effective for the determination of the filter coefficients of a polarization de-multiplexer. In particular, it has been found that standard CMA fails to perform polarization de-multiplexing for PDM BPSK modulated signals. A DD algorithm takes into account the detected symbols at the output of the symbol identification unit 105 or the MSLE detection unit 206. In particular, the error signal $\varepsilon_{DD} = |t_k|^2 - |s_k|^2$ is used, where $t_k$ are the possible emitted symbols and $s_k$ are the detected symbols. The DD algorithm may be used to jointly determine the filters and the phase shifts of the polarization de-multiplexing and equalization stage 203 and the carrier phase estimation and compensation unit 204. The DD algorithm is described in details in the documents A. Benveniste, M. Goursat, "Blind Equalizers", IEEE Transaction on Communications, Vol. 32, No. 8, pp. 871-883 (1984), and P. Winzer and A. Gnauck, "112-Gb/s polarization-multiplexed 16-QAM on a 25-GHz WDM grid," ECOC 2008, Brussels, Belgium: 2008, p. Th.3.E.5..

In addition to performing polarization de-multiplexing and equalization, it may be preferable to compensate a frequency difference between the local oscillator at the receiver and the optical signal prior to MLSE processing. This may be performed in the carrier frequency compensation stage 204. Furthermore, the optical receiver may comprise a clock recovery stage 205 positioned prior to MLSE processing.

Subsequent to some or all of the above processing stages 202, 203, 204, 205, MLSE processing 206 may be performed on the received signal. As indicated above, MLSE processing 206 may be performed on both polarization signal components jointly. However, in order to reduce computation complexity, it may be preferable to perform MLSE processing 206 on each polarization de-multiplexed signal component separately. MLSE processing 206 may then be applied effectively and help to compensate impairments caused by narrow optical or electrical filtering, e.g. as a result of optical bandwidth limitations at the transmitter or due to analog bandwidth limitations of ADCs.

The MLSE processing or detection unit 206 typically performs the estimation of a sequence of symbols under maximum likelihood considerations. In an embodiment, $p$ = 2, 3, 4 or 5 succeeding received symbols may be estimated jointly. If MLSE detection is performed separately for each polarization, the number of required states corresponds to $m^p$, wherein $m$ is the number of constellation points of the underlying modulation scheme, e.g. $m=2$ for BPSK, $m=4$ for QPSK and $m= 16$ for 16-QAM, and wherein $p$ is the memory of the MLSE processor. If MLSE detection is performed jointly for both polarizations, the number of required states is doubled. As can be seen from the exponentially increasing number of states, MLSE detection is difficult in the context of modulation schemes having a high number of constellation states. On the other hand, MLSE detection involving a reasonable degree of memory is feasible when using lower order modulation schemes, such as BPSK.

The estimation of a sequence of symbols it typically performed using a Viterbi algorithm. Details on MLSE detection schemes are described in the documents Forney, G., Jr., "Maximum-likelihood sequence estimation of digital sequences in the presence of intersymbol interference," Information Theory, IEEE Transactions on, vol.18, no.3, pp. 363-378, May 1972, or Forney, G.D., Jr., "The viterbi algorithm," Proceedings of the IEEE, vol.61, no.3, pp. 268-278, March 1973 or Digital Communications, John G. Proakis, 4th edition (New York: McGraw Hill), chapter 10.

In an embodiment of a coherent receiver using the DD algorithm, the received waveforms are processed off-line, for performing re-sampling at twice the symbol rate (in case of BPSK modulation an oversampling at 2 samples/symbol is performed, such oversampling may be performed in an oversampling unit 304 illustrated in Fig. 3), digital chromatic dispersion mitigation, and equalization and polarization de-multiplexing through decision directed (DD) algorithm using the error signal $\varepsilon_{DD} = |t_k|^2 - |S_k|^2$. The equalizer may also perform carrier frequency and phase estimation (CFE/CPE) with a frequency and phase tracking loop that compares the phase of $S_k$ with that of $t_k$ and filters the result with two different time constants, a slow time constant (~1000 symbols) for CFE and a fast time constant (~10 symbols) for CPE. The properly weighted sum of these filtered values typically represents the phase of the error signal. Finally, symbols are discriminated for the measurement of bit error ratios (BER) which are subsequently transformed into $Q^2$-factors after averaging over at least four recordings.

It has also been observed that the algorithm used for the determination of the filter coefficients of the polarization de-multiplexer and equalizer may have convergence issues when used in conjunction with signals which have incurred low pass filtering over the optical transmission channel. As outlined above, such an algorithm may be the CMA algorithm or the DD algorithm. In order to address this convergence issue, it may be beneficial to determine the coefficients of the polarization de-multiplexing and PMD compensation filter in stage 203 using a lower speed training sequence. As a result, the standard CMA or DD algorithm could be used to determine the filter coefficients, in view of the fact that the lower speed training sequence would not have incurred the low pass filtering.

This is illustrated in Fig. 3. By way of example, a 28GSymbol/s sequence could be used for the lower speed training sequence instead of a 56GSymbol/s sequence at regular transmission rate. As an outcome, filter coefficients of the butterfly filter 209 may be determined within a filter determination unit 301. The coefficients which are determined in unit 301 are applicable to signals at a reduced symbol rate. Consequently, the coefficients of the determined butterfly filter 209 may need to be interpolated in the time-domain, in order to provide a butterfly filter 209 which is applicable to the polarization de-multiplexing and the equalization of the received signal at the regular transmission rate.

Furthermore, it may be beneficial to convert the filter determined in unit 301 into an all pass filter, in order to compensate for an undesirable high pass filter behavior. Such a conversion of the CMA determined filter into an all pass filter may be performed in the filter conversion unit 302 and may comprise the step of multiplying the CMA determined filter with its inverse frequency response or transfer function. In particular, each of the filters 210, 211, 212, 213 of the butterfly filter 209 may be weighted by its respective inverse frequency response in particular the magnitude or gain of the frequency response, i.e. by

$$W_{xx}(f) = \frac{1}{|A_{xx}(f)|},$$

$$W_{xy}(f) = \frac{1}{|A_{xy}(f)|}, \quad W_{yx}(f) = \frac{1}{|A_{yx}(f)|} \quad \text{and}$$

$$W_{yy}(f) = \frac{1}{|A_{yy}(f)|}, \quad \text{respectively. The filters deter-}$$

mined in the filter determination unit 301 may be converted into the frequency domain and the frequency response may be weighted by the absolute value of the frequency response, thereby yielding an all pass filter which may perform phase modifications but no amplitude modifications, i.e. an all pass filter having a frequency dependent phase response but a constant amplitude response. In other words, the frequency response of the filter $A_{xx}$, $A_{xy}$, $A_{yx}$ and $A_{yy}$ may be determined e.g. by FFT. The filter response may be normalized such that the value of the module of each frequency band of the frequency response is 1. Then the new filters are calculated in the temporal domain e.g. by performing an inverse FFT. In this context, stability issues with regards to the inverse frequency response may need to be taken into account. As an outcome, an all pass filter for polarization de-multiplexing, possible residual chromatic dispersion compensation and PMD compensation is provided.

In an embodiment, periodical training sequences 303 could be used and sent towards the reduced speed filter determination unit 301 for determination of the filter coefficients used in stage 203. Typically, training sequences should be sent every 10 or 100 $\mu$s so that the receiver can track polarization fluctuations which can occur at a ms or faster rate. Alternatively or in addition, the reduced speed training sequences 303 could be used to initialize the transponder processing 200. The update of the polarization de-multiplexing and PMD filter 302 could be performed by using information coming from a separate channel estimator, e.g. from the MLSE processing stage 206 and/or another channel estimator. This may be particularly beneficial, if a combined and simultaneous MLSE processing 206 of both polarizations is performed.

Using the above receiver, it is possible to transmit 112Gbit/s signals having a broad optical spectrum over a 50 GHz channel spacing and using available ADC technology, i.e. using ADCs having an analog bandwidth in the range of 20 to 25GHz. In other words, using the above coherent receiver, it is possible to reliably transmit optical signals having a broad optical spectrum over bandwidth limited optical channels.

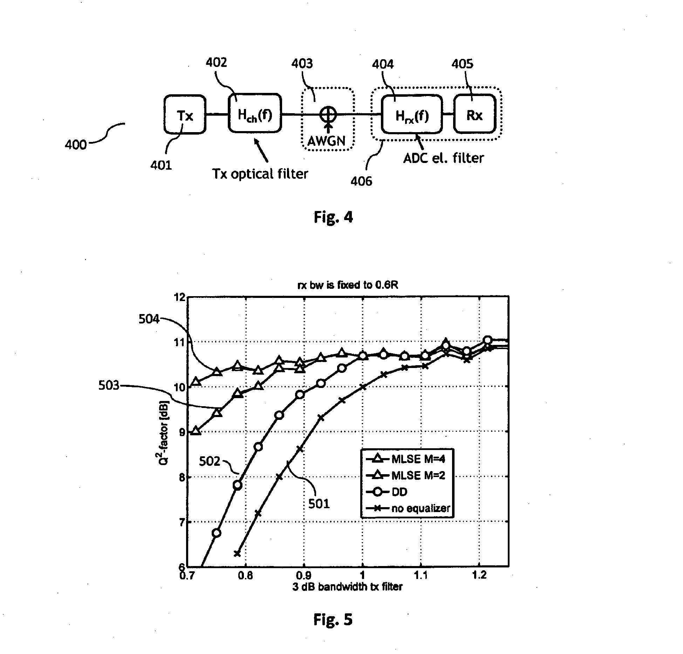

This is illustrated in the following experimental results. In particular, examples of the processing of ISI-distorted signals using MLSE within a coherent receiver are presented. Fig. 4 shows a reference setup 400, where a BPSK transmitter 401 is followed by an optical filter $H_{ch}(f)$ 402, wherein the optical filter 402 corresponds to transmitter or ROADM optical filtering at typically 40-50GHz within an optical network. An exemplificative case of an additive white Gaussian noise (AWGN) channel 403 is considered. At the receiver side 406, the signal is first filtered by the filter $H_{rx}(f)$ 404 which corresponds to ADC analog bandwidth filtering typically in the range of 16-24GHz. Then the signal undergoes the aforementioned digital signal processing chain 405. In the simulations, the filters $H_{ch}(f)$ and $H_{rx}(f)$ are super-gaussians of order 3 with a variable bandwidth. The local oscillator inside the receiver 406 has a linewidth of 100 kHz and it is detuned by 100 MHz from the carrier frequency. In the following, the signal baud rate will be denoted as R, and the illustrated frequencies are normalized to this value.

Figure 5 shows the system performance in terms of $Q^2$-factor when the signal to noise ratio is fixed at 8.5 dB, and when the bandwidth of the optical filter $H_{ch}(f)$ 402 is changed. Furthermore, the bandwidth limitation of the analog filter 404 at the receiver 406 is set to 0.6 time the signal baud rate R. The graph 501 shows the results when no equalizer, i.e. when threshold detection, is used. The graph 502 shows the results when a conventional decision-directed (DD) equalizer is used, i.e. when the coherent receiver 100 of Fig. 1a is used in conjunction with a DD determined equalizer (which typically has less convergence issues than a CMA determined equalizer). The graphs 503 and 504 show the results when using MLSE based receivers as outlined in the present document with 4 or 16 states, respectively, i.e. with a memory of 2 or 4 symbols, respectively.

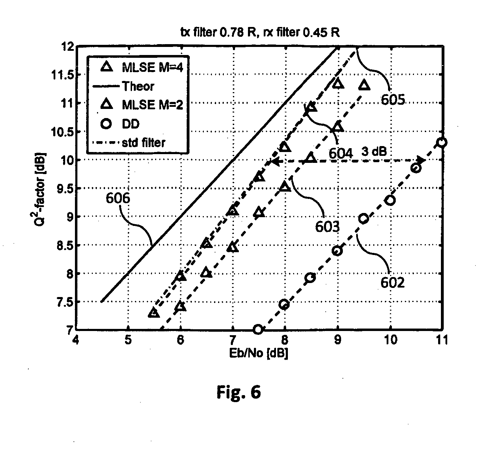

In Fig. 6 the sensitivity to noise is shown, i.e. the signal to noise ratio Eb/No is modified. The filter 402 at the transmitter side is fixed at a 3 dB bandwidth of 0.78 R, which corresponds to approx. 44 GHz for a 56 Gb/s BPSK signal. The filter 404 at the receiver side is fixed at a 3 dB bandwidth of 0.45 R which corresponds to approx. 25 GHz for a 56 Gb/s BPSK signal. The advantage brought by the use of MLSE over the traditional decision directed equalizer is appreciable. Graph 602 shows the $Q^2$-factor obtained using a conventional coherent receiver using a DD determined equalizer. Graphs 603 and 604 show the $Q^2$-factors obtained using the proposed coherent receiver involving a 4 or a 16 state MLSE detector, respectively. Furthermore, graph 605 illustrates the case where a QPSK signal is transmitted, instead of a BPSK signal, i.e. graph 605 illustrates that case, where the transmitted signal does not incur any low pass filtering. It can be seen that graphs 605 and 604 almost coincide, indicating that the low pass filtering effects incurred in an optical transmission system can be completely compensated using the proposed MLSE based coherent receiver. Finally, graph 606 shows the theoretical limit.

Overall, it can be stated that the use of MLSE has a clear advantage over standard processing such as DD or CMA when the 3dB bandwidth filter of the transmission channel drops below 0.9 of the symbol rate. At a bandwidth limitation of 0.72 times the symbol rate, i.e. at 40GHz optical bandwidth for a 56Gsymbol/s signal, which corresponds to the optical bandwidth after the cascade of several ROADMs, the proposed coherent receiver using 16 states MLSE detection provides more than 4dB improvement over a filter based algorithm.

In summary, the improvement brought by MLSE processing is clearly over a standard "filter" approach. It has been shown that by combining all pass filters, notably for polarization de-multiplexing and PMD compensation, and MLSE detection for the mitigation of narrow optical/electrical filtering the benefits of both techniques, i.e. the simplicity of the equalization filters and the performance of MLSE, can be exploited. The use of FIR filtering before MLSE detection is useful to keep MLSE complexity, i.e. notably the number of states, low. MLSE detection with 4 to 16 states can be realized and implemented into digital processors which are available today.

It should be noted that the description and drawings merely illustrate the principles of the proposed methods and systems. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A detection unit (25) configured to detect a symbol from a received digital signal, wherein the digital signal has been derived from an optical signal transmitted over an optical transmission channel and wherein the digital signal has been submitted to low pass filtering, the detection comprising:

   - a filter determination unit (301) configured to determine a first plurality of filter coefficients of a digital filter based on the digital signal;
   - a filter conversion unit (302) configured to determine a second plurality of filter coefficients from the first plurality of filter coefficients in order to compensate for a high pass behavior of the digital filter configured with the first plurality of filter coefficients, such that a digital filter configured with the second plurality of filter coefficients is essentially an all pass filter;
   - a filter unit (203, 204) configured to filter the digital signal for the compensation of polarization mode dispersion and/or chromatic dispersion, using the digital filter configured with the second plurality of coefficients; and
- a maximum likelihood sequence detector (206), referred to as MLSE detector, configured to detect the symbol from the filtered digital signal at a given time instant, while taking into account one or more symbols of one or more previous time instants.

2. An optical receiver (300) configured to detect a symbol from a received optical digital signal transmitted over an optical transmission channel, the receiver comprising:

- a reception unit (201, 20) configured to convert the optical signal into a digital signal; and
- a detection unit (25) according to claim 1, wherein the detection unit (25) is configured to detect the symbol from the digital signal which has been submitted to low pass filtering.

3. The receiver (300) of claim 2, wherein

- the optical signal is a polarization division multiplexed optical signals; and/or
- the optical signal uses BPSK modulation or xPSK signal with x<8.

4. The receiver (300) of any of claims 2 to 3, wherein the optical receiver (300) is a coherent optical receiver and wherein the reception unit (201, 20) comprises:

- a local oscillator (2);
- a coherent mixer (10);
- a photodiode (21, 22); and/or
- an analog-to-digital converter (23, 24, 201).

5. The receiver (300) of any of claims 2 to 4, wherein

- the optical signal at a corresponding transmitter has a signal symbol rate corresponding to a signal bandwidth;
- the transmission channel has a channel bandwidth; and
- the channel bandwidth is smaller than the signal bandwidth.

6. The receiver (300) of claim 5, wherein the filter determination unit (301) is further configured to

- determine an intermediate plurality of filter coefficients using a training sequence transmitted within the optical signal; wherein at the corresponding transmitter the optical signal comprising the training sequence has a training symbol rate corresponding to a training bandwidth;

wherein the training bandwidth is smaller or equal the channel bandwidth; and
- determine the first plurality of filter coefficients from the intermediate plurality of filter coefficients by taking into account the ratio between the training bandwidth and the signal bandwidth.

7. The receiver (300) of claim 6, wherein

- the training symbol rate is smaller than the signal symbol rate, thereby yielding the training bandwidth which is smaller than the signal bandwidth.

8. The receiver (300) of any of claims 5 or 7, wherein

- the first plurality of coefficients is determined by interpolating the intermediate plurality of coefficients in the time-domain.

9. The receiver (300) of any of claims 2 to 8, wherein the filter determination unit (301) is configured to determine the first plurality of coefficients using

- a constant modulus algorithm; and/or
- a direct detection algorithm.

10. The receiver (300) of any of claims 2 to 9, wherein

- the digital filter configured with the first plurality of filter coefficients has a high pass characteristic; and/or
- the second plurality of filter coefficients is determined by multiplying the digital filter configured with the first plurality of coefficients by the inverse amplitude response of the digital filter configured with the first plurality of coefficients in the frequency domain.

11. The receiver (300) of any of claims 2 to 10, wherein the digital filter configured with the second plurality of filter coefficients has an essentially constant amplitude response in the frequency domain.

12. The receiver (300) of any of claims 2 to 11, wherein the filter unit (203, 204) is further configured to perform polarization de-multiplexing.

13. The receiver (300) of any of claims 2 to 12, wherein

- the MLSE detector (206) is configured to execute a Viterbi algorithm.

14. The receiver (300) of any of claims 2 to 13, wherein

- the optical signal comprises a first and a second polarization component; and
- the MSLE detector (206) is configured to process both components separately.

15. A method for detecting a symbol from a received digital signal, wherein the digital signal has been derived from an optical signal transmitted over an optical transmission channel and wherein the digital signal has been submitted to low pass filtering, the method comprising:

- determining a first plurality of filter coefficients of a digital filter based on the digital signal;
- determining a second plurality of filter coefficients from the first plurality of filter coefficients in order to compensate for a high pass behavior of the digital filter configured with the first plurality of filter coefficients, such that a digital filter configured with the second plurality of filter coefficients is essentially an all pass filter;
- filtering the digital signal for the compensation of polarization mode dispersion and/or chromatic dispersion, using the digital filter configured with the second plurality of coefficients; and
- detecting the symbol from the filtered digital signal at a given time instant, while taking into account one or more symbols of one or more previous time instants, and while using a maximum likelihood criteria.

**Patentansprüche**

1. Erkennungseinheit (25), konfiguriert für das Erkennen eines Symbols aus einem empfangenen digitalen Signal, wobei das digitale Signal von einem über einen optischen Übertragungskanal übertragenen optischen Signal abgeleitet wurde, und wobei das digitale Signal einer Tiefpassfilterung unterworfen wurde, wobei die Erkennungseinheit umfasst:

- Eine Filterbestimmungseinheit (301), konfiguriert für das Bestimmen einer ersten Vielzahl von Filterkoeffizienterl eines digitalen Filters auf der Basis des digitalen Signals;
- eine Filterumwandlungseinheit (302), konfiguriert für das Bestimmen einer zweiten Vielzahl von Filterkoeffizienten aus der ersten Vielzahl von Filterkoeffizienten, um ein Hochpassverhalten des mit der ersten Vielzahl von Filterkoeffizienten konfigurierten digitalen Filters zu kompensieren, so dass ein mit der zweiten Vielzahl von Filterkoeffizienten konfigurierter digitaler Filter im Wesentlichen ein Allpassfilter ist;
- eine Filtereinheit (203, 204), konfiguriert für das Filtern des digitalen Signals zur Kompensation einer Polarisationsmodendispersion und/oder einer chromatischen Dispersion unter Verwendung des mit der zweiten Vielzahl von Koeffizienten konfigurierten digitalen Filters; und

- einen Maximalwahrscheinlichkeitssequenz- bzw. MLSE-Detektor (206), konfiguriert für das Erkennen des Symbols aus dem gefilterten digitalen Signal zu einem gegebenen Zeitpunkt unter Berücksichtigung eines oder mehrerer Symbole eines oder mehrerer vorhergehenden Zeitpunkte.

2. Optischer Empfänger (300), konfiguriert für das Erkennen eines Symbols aus einem empfangenen, über einen optischen Übertragungskanal übertragenen digitalen optischen Signal, wobei der Empfänger umfasst:

- Eine Empfangseinheit (201, 20), konfiguriert für das Umwandeln des optischen Signals in ein digitales Signal; und
- eine Erkennungseinheit (25) gemäß Anspruch 1, wobei die Erkennungseinheit (25) für das Erkennen des Symbols aus dem digitalen Signal, welches einer Tiefpassfilterung unterworfen wurde, konfiguriert ist.

3. Empfänger nach Anspruch 2, wobei

- das optische Signal ein polarisationsgemultiplextes optisches Signal ist;
und/oder
- das optische Signal eine BPSK-Modulation oder ein xPSK-Signal mit x<8 verwendet.

4. Empfänger (300) nach einem beliebigen der Ansprüche 2 bis 3, wobei der optische Empfänger (300) ein kohärenter optischer Empfänger ist, und wobei die Empfangseinheit (201, 20) umfasst:

- Einen lokalen Oszillator (2);
- einen kohärenten Mischer (10);
- eine Fotodiode (21, 22); und/oder
- einen Analog-Digital-Wandler (23, 24, 201).

5. Empfänger (300) nach Anspruch 2 bis 4, wobei

- das optische Signal an einem entsprechenden Sender eine einer Signalbandbreite entsprechende Signalsymbolrate aufweist;
- der Übertragungskanal eine Kanalbandbreite aufweist; und
- die Kanalbandbreite kleiner als die Signalbandbreite ist.

6. Empfänger (300) nach Anspruch 5, wobei die Filterbestimmungseinheit (301) weiterhin für Folgendes konfiguriert ist:

- Ermitteln einer Zwischenvielzahl von Filterkoeffizienten unter Verwendung einer innerhalb des optischen Signals übertragenen Trainingssequenz; wobei, an dem entsprechenden Sender, das optische Signal, welches die Trainingssequenz enthält, eine einer Trainingsbandbreite entsprechende Trainingssymbolrate aufweist, wobei die Trainingsbandbreite kleiner als die oder gleich der Kanalbandbreite ist; und
- Ermittelt der ersten Vielzahl von Fitterkoeffizienten aus der Zwischenvielzahl von Filterkoeffizienten unter Berücksichtigung des Verhältnisses zwischen der Trainingsbandbreite und der Signalbandbreite.

7. Empfänger (300) nach Anspruch 6, wobei

- die Trainingssymbolrate kleiner als die Signalsymbolrate ist, wodurch die Trainingsbandbreite, die kleiner als die Signalbandbreite ist, erhalten wird.

8. Empfänger (300) nach Anspruch 5 oder 7, wobei

- die erste Vielzahl von Koeffizienten durch Interpolieren der Zwischenvielzahl von Koeffizienten im Zeitbereich bestimmt wird.

9. Empfänger (300) nach einem beliebigen der Ansprüche 2 bis 8, wobei die Filterbestimmungseinheit (301) dafür konfiguriert ist, die erste Vielzahl von Koeffizienten unter Verwendung

- eines Konstant-Modulus-Algorithmus; und/oder
- eines Direktdetektions-Algorithmus

zu bestimmen.

10. Empfänger (300) nach einem beliebigen der Ansprüche 2 bis 9, wobei

- der mit der ersten Vielzahl von Filterkoeffizienten konfigurierte digitale Filter eine Hochpasseigenschaft aufweist; und/oder
- die zweite Vielzahl von Filterkoeffizienten durch Multiplizieren des mit der ersten Vielzahl von Koeffizienten konfigurierten digitalen Filters mit dem inversen Amplitudengang des mit der ersten Vielzahl von Koeffizienten konfigurierten digitalen Filters im Frequenzbereich bestimmt wird.

11. Empfänger (300) nach einem beliebigen der Ansprüche 2 bis 10, wobei der mit der zweiten Vielzahl von Filterkoeffizienten konfigurierte digitale Filter einen im Wesentlichen konstanten Amplitudengang in dem Frequenzbereich aufweiset.

12. Empfänger (300) nach einem beliebigen der Ansprüche 2 bis 11, wobei die Filtereinheit (203, 204) weiterhin für das Durchführen von Polarisations-Demultiplexing konfiguriert ist.

13. Empfänger (300) nach einem beliebigen der Ansprüche 2 bis 12, wobei

- der MSLE-Detektor (206) für das Ausführen eines Viterbi-Algorithmus konfiguriert ist.

14. Empfänger (300) nach einem beliebigen der Ansprüche 2 bis 13, wobei

- das optische Signal eine erste und eine zweite Polarisationskomponente umfasst; und
- der MSLE-Detektor (206) für das separate Verarbeiten beider Komponente konfiguriert ist.

15. Verfahren zum Erkennen eines Symbols aus einem empfangenen digitalen Signal, wobei das digitale Signal von einem über einen optischen Übertragungskanal übertragenen optischen Signal abgeleitet wurde, und wobei das digitale Signal einer Tiefpassfilterung unterworfen wurde, wobei das Verfahren umfasst:

- Bestimmen einer ersten Vielzahl von Filterkoeffizienten eines digitalen Filters auf der Basis des digitalen Signals;
- Bestimmen einer zweiten Vielzahl von Filterkoeffizienten aus der ersten Vielzahl von Filterkoeffizienten, um ein Hochpassverhalten des mit der ersten Vielzahl von Filterkoeffizienten konfigurierten digitalen Filters zu kompensieren, so dass ein mit der zweiten Vielzahl von Filterkoefiizienten konfigurierter digitaler Filter im Wesentlichen ein Allpassfilter ist;
- Filtern des digitalen Signals zur Kompensation einer Polarisationsmodendispersion und/oder einer chromatischen Dispersion unter Verwendung des mit der zweiten Vielzahl von Koeffizienten konfigurierten digitalen Filters; und
- Erkennen des Symbols aus dem gefilterten digitalen Signal zu einem gegebenen Zeitpunkt unter Berücksichtigung eines oder mehrerer Symbole eines oder mehrerer vorhergehenden Zeitpunkte, und unter Verwendung eines Maximalwahrscheinlichkeitskriteriums.

**Revendications**

1. Unité de détection (25) configurée pour détecter un symbole à partir d'un signal numérique reçu, le signal numérique ayant été dérivé d'un signal optique transmis sur un canal de transmission optique et le signal numérique ayant été soumis à un filtrage passe-bas, l'unité de détection comprenant :

- une unité de détermination de filtre (301) configurée pour déterminer une première pluralité de coefficients de filtre d'un filtre numérique sur la base du signal numérique ;

- une unité de conversion de filtre (302) configurée pour déterminer une deuxième pluralité de coefficients de filtre à partir de la première pluralité de coefficients de filtre afin de compenser un comportement passe-haut du filtre numérique configuré avec la première pluralité de coefficients de filtre, de sorte qu'un filtre numérique configuré avec la deuxième pluralité de coefficients de filtre soit généralement un filtre passe-tout ;

- une unité de filtre (203, 204) configurée pour filtrer le signal numérique pour la compensation de dispersion de mode de polarisation et/ou de dispersion chromatique, en utilisant le filtre numérique configuré avec la deuxième pluralité de coefficients ; et

- un détecteur de séquence à maximum de vraisemblance (206), appelé détecteur MLSE, configuré pour détecter le symbole à partir du signal numérique filtré à un moment donné, en tenant compte d'un ou de plusieurs symboles d'un ou de plusieurs moments précédents.

2. Récepteur optique (300) configuré pour détecter un symbole à partir d'un signal optique numérique reçu transmis sur un canal de transmission optique, le récepteur comprenant :

- une unité de réception (201, 20) configurée pour convertir le signal optique en un signal numérique ; et

- une unité de détection (25) selon la revendication 1, l'unité de détection (25) étant configurée pour détecter le symbole à partir du signal numérique qui a été soumis à un filtrage passe-bas.

3. Récepteur (300) selon la revendication 2, dans lequel

- le signal optique est un signal optique multiplexé par répartition en polarisation ; et/ou

- le signal optique utilise la modulation BPSK ou un signal xPSK avec x<8.

4. Récepteur (300) selon l'une quelconque des revendications 2 et 3, dans lequel le récepteur optique (300) est un récepteur optique cohérent et dans lequel l'unité de réception (201, 20) comprend :

- un oscillateur local (2) ;

- un mélangeur cohérent (10) ;

- une photodiode (21, 22) ; et/ou

- un convertisseur analogique-numérique (23, 24, 201).

5. Récepteur (300) selon l'une quelconque des revendications 2 à 4, dans lequel

- le signal optique au niveau d'un émetteur correspondant a un débit de symboles de signaux correspondant à une largeur de bande de signal ;

- le canal de transmission a une largeur de bande de canal ; et

- la largeur de bande de canal est inférieure à la largeur de bande de signal.

6. Récepteur (300) selon la revendication 5, dans lequel l'unité de détermination de filtre (301) est en outre configurée pour

- déterminer une pluralité intermédiaire de coefficients de filtre en utilisant une séquence d'apprentissage transmise dans le signal optique ; dans lequel, au niveau de l'émetteur correspondant, le signal optique comprenant la séquence d'apprentissage a un débit de symboles d'apprentissage correspondant à une largeur de bande d'apprentissage ; la largeur de bande d'apprentissage étant inférieure ou égale à la largeur de bande de canal et

- déterminer la première pluralité de coefficients de filtre à partir de la pluralité intermédiaire de coefficients de filtre en tenant compte du rapport entre la largeur de bande d'apprentissage et la largeur de bande de signal.

7. Récepteur (300) selon la revendication 6, dans lequel

- le débit de symboles d'apprentissage est inférieur au débit de symboles de signaux, produisant ainsi la largeur de bande d'apprentissage qui est inférieure à la largeur de bande de signal.

8. Récepteur (300) selon l'une quelconque des revendications 5 et 7, dans lequel

- la première pluralité de coefficients est déterminée en interpolant la pluralité intermédiaire de coefficients dans le domaine temporel.

9. Récepteur (300) selon l'une quelconque des revendications 2 à 8, dans lequel l'unité de détermination de filtre (301) est configurée pour déterminer la première pluralité de coefficients en utilisant

- un algorithme à module constant ; et/ou

- un algorithme de détection directe.

10. Récepteur (300) selon l'une quelconque des revendications 2 à 9, dans lequel

- le filtre numérique configuré avec la première pluralité de coefficients de filtre a une caractéristique passe-haut ; et/ou
- la deuxième pluralité de coefficients de filtre est déterminée en multipliant le filtre numérique configuré avec la première pluralité de coefficients par la réponse d'amplitude inverse du filtre numérique configuré avec la première pluralité de coefficients dans le domaine de fréquences.

**11.** Récepteur (300) selon l'une quelconque des revendications 2 à 10, dans lequel le filtre numérique configuré avec la deuxième pluralité de coefficients de filtre a une réponse d'amplitude généralement constante dans le domaine de fréquences.

**12.** Récepteur (300) selon l'une quelconque des revendications 2 à 11, dans lequel l'unité de filtre (203, 204) est en outre configurée pour effectuer un démultiplexage de polarisation.

**13.** Récepteur (300) selon l'une quelconque des revendications 2 à 12, dans lequel

- le détecteur MLSE (206) est configuré pour exécuter un algorithme de Viterbi.

**14.** Récepteur (300) selon l'une quelconque des revendications 2 à 13, dans lequel

- le signal optique comprend une première et une deuxième composantes de polarisation ; et
- le détecteur MLSE (206) est configuré pour traiter les deux composantes séparément.

**15.** Procédé pour détecter un symbole à partir d'un signal numérique reçu, le signal numérique ayant été dérivé d'un signal optique transmis sur un canal de transmission optique et le signal numérique ayant été soumis à un filtrage passe-bas, le procédé comprenant les étapes suivantes :

- déterminer une première pluralité de coefficients de filtre d'un filtre numérique sur la base du signal numérique ;
- déterminer une deuxième pluralité de coefficients de filtre à partir de la première pluralité de coefficients de filtre afin de compenser un comportement passe-haut du filtre numérique configuré avec la première pluralité de coefficients de filtre, de sorte qu'un filtre numérique configuré avec la deuxième pluralité de coefficients de filtre soit généralement un filtre passe-tout;
- filtrer le signal numérique pour la compensation de dispersion de mode de polarisation et/ou de dispersion chromatique, en utilisant le filtre numérique configuré avec la deuxième pluralité de coefficients ; et
- détecter le symbole à partir du signal numérique filtré à un moment donné, en tenant compte d'un ou de plusieurs symboles d'un ou de plusieurs moments précédents, et en utilisant un critère de maximum de vraisemblance.

**Fig. 1a**

**Fig. 1b**

**Fig. 1c**

**Fig. 2a**

**Fig. 2b**

**Fig. 3**

**Fig. 4**

rx bw is fixed to 0.6R

**Fig. 5**

**Fig. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- ADC bandwidth optimization in coherent optical polarization multiplexing quadrature phase-shift keying system. **ZHANG et al.** Communications and photonics conference and exhibition. IEEE, 02 November 2009, 1-6
- Coherent detection associated with digital signal processing for fiber optics communication. **CHARLET et al.** Comptes Rendus - Physique. Elsevier, 01 November 2008, vol. 9, 1012-1030
- **S.J. SAVORY et al.** Digital Equalisation of 40Gbit/s per Wavelength Transmission over 2480km of Standard Fibre without Optical Dispersion Compensation. *Proceedings of ECOC 2006, Cannes,* September 2006

- **A. BENVENISTE ; M. GOURSAT.** Blind Equalizers. *IEEE Transaction on Communications,* 1984, vol. 32 (8), 871-883
- **P. WINZER ; A. GNAUCK.** 112-Gb/s polarization-multiplexed 16-QAM on a 25-GHz WDM grid. *ECOC 2008, Brussels, Belgium,* 2008, Th.3.E.5
- **FORNEY, G., JR.** Maximum-likelihood sequence estimation of digital sequences in the presence of intersymbol interference. *Information Theory, IEEE Transactions,* May 1972, vol. 18 (3), 363-378
- **FORNEY, G.D., JR.** The viterbi algorithm. *Proceedings of the IEEE,* March 1973, vol. 61 (3), 268-278
- **JOHN G. PROAKIS.** Digital Communications. Mc-Graw Hill